Europäisches Patentamt

European Patent Office

Office européen des brevets

(11) Veröffentlichungsnummer : **0 424 482 B1**

(12) **EUROPÄISCHE PATENTSCHRIFT**

(45) Veröffentlichungstag der Patentschrift :
24.05.95 Patentblatt 95/21

(21) Anmeldenummer : 90904793.8

(22) Anmeldetag : 19.03.90

(86) Internationale Anmeldenummer :
PCT/EP90/00447

(87) Internationale Veröffentlichungsnummer :
WO 90/13895 15.11.90 Gazette 90/26

(51) Int. Cl.⁶ : **G11B 33/08**

(54) **GERÄT MIT ERSCHÜTTERUNGSEMPFINDLICHEN TEILEN.**

(30) Priorität : 29.04.89 DE 3914303

(43) Veröffentlichungstag der Anmeldung :
02.05.91 Patentblatt 91/18

(45) Bekanntmachung des Hinweises auf die
Patenterteilung :
24.05.95 Patentblatt 95/21

(84) Benannte Vertragsstaaten :
AT BE CH DE FR GB IT LI LU NL SE

(56) Entgegenhaltungen :
CH-A- 581 280
FR-A- 2 586 462
US-A- 3 941 402
US-A- 4 475 184
US-A- 4 815 575

(56) Entgegenhaltungen :
PATENT ABSTRACTS OF JAPAN vol. 8, no. 89
(P-270)(1526) 24 April 1984, & JP-A-59 5401
(MATSUSHITA DENKI SANGYO K.K.) 12 Januar 1984, siehe das ganze Dokument
PATENT ABSTRACTS OF JAPAN vol. 10, no.
211 (M-501)(2267) 24 Juli 1986, & JP-A-61 52435
(NHK SPRING CO LTD) 15 März 1986, siehe
das ganze Dokument
PATENT ABSTRACTS OF JAPAN vol. 11, no.
281 (M-624)(2728) 11 September 1987, & JP-
A-62 80318 (HITACHI LTD) 13 April 1987, siehe
das ganze Dokument

(73) Patentinhaber : **Deutsche Thomson-Brandt
GmbH
Postfach 1307
D-78003 Villingen-Schwenningen (DE)**

(72) Erfinder : **KÜHN, Hans-Robert
Haydnweg 9
D-7742 St. Georgen (DE)**

## Beschreibung

Die Erfindung betrifft ein Gerät nach dem Oberbegriff des ersten Anspruchs.

Für derartige Geräte besteht die Forderung, z.B. bei CD-Spielern, daß sie auch bei starken Erschütterungen eine einwandfreie Abtastung gewährleisten sollen.

Die effektive Laufwerk-Masse bildet mit den Entkopplungs-Elastizitäten eine entsprechend der jeweils vorliegenden Dämpfung mehr oder weniger ausgeprägte Resonanz im tiefen Frequenzbereich, in dem auch erfahrungsgemäß das üblicherweise auftretende Erschütterungsspektrum Liegt.

Ein besonderer Machteil der Geräte nach dem Stand der Technik ist die Tatsache, daß durch unterschiedliche Einbaubedingungen bei den einzelnen Fahrzeugtypen und auch durch Fahrzeugeigenschaften sowie mögliche Einsatz- und Betriebsbedingungen ganz bestimmte Frequenzen im Erschütterungsspektrum einen negativen Einfluß auf die Abtastsicherheit ausüben. Derartige Frequenzen sind solche Resonanzen, die meistens nicht vermieden werden können, und die insbesondere dann einen ungünstigen Einfluß haben, wenn sie mit der gerätetypischen Resonanzfrequenz, die durch die Laufwerk-Masse und die verwendeten Entkopplung-Elastizitäten hervorgerufen wird, zusammenfallen oder in deren Nähe liegen.

In der US-PS 4,475,184 ist ein Plattenspieler beschrieben, der als sogenanntes Heimgerät ausgeführt ist und nicht zum Einbau in Fahrzeuge geeignet ist. Eine oben offene Wanne ist mit einer Dämpfungsflüssigkeit gefüllt, in welcher der Plattenspieler schwimmend gelagert ist. Um den Plattenspieler in der Mitte der Wanne zu halten, sind an den vier Ecken des Plattenspielers und der Wanne Magnete einander gegenüberliegend angeordnet. Dieser Plattenspieler ist nicht für den Einbau in Fahrzeuge geeignet, denn infolge der in einem Auto beim Beschleunigen und Bremsen auftretenden Trägheitskräfte würde die Dämpfungsflüssigkeit aus der Wanne überschwappen.

In der US-PS 4,815,575 ist ein elektromagnetischer Schockabsorber oder Schockdämpfer für eine Fahrzeugachse beschrieben. Die Relativbewegung zwischen der mittels einer Feder mit dem Fahrzeugrahmen verbundenen Fahrzeugachse und dem Rahmen wird mittels eines Drehstromgenerators in einen Drehstrom umgewandelt, der anschließend gleichgerichtet wird. Der gleichgerichtete Strom wird in einem Lastwiderstand in Wärme umgewandelt. Die Stromabgabe des Drehstromgenerators an den Lastwiderstand wird von einem Mikrocomputer durch Pulsweitenmodulation gesteuert. Auf diese Art und Weise wird die Dämpfung des elektromagnetischen Schockabsorbers gesteuert.

Der vorliegenden Erfindung lag die Aufgabe zugrunde, der Problematik abzuhelfen, daß diese genannten Resonanzfrequenzen sich in ihrer Wirkung verstärken und dadurch die geforderte Abtastsicherheit unmöglich machen.

Wie Anspruch 1 angibt, wird diese Aufgabe dadurch gelöst, daß die Resonanzfrequenz fo des Gerätes, die gebildet wird aus der Laufwerk-Masse, den Entkopplungs-Elastizitäten und ihrer Dämpfung, einstellbar gestaltet ist, so daß bei unterschiedlichen, herausragenden Amplituden im Erschütterungsspektrum ein Optimum an Abtastsicherheit erreicht wird. Ausgestaltungen sind Unteransprüchen und Ausführungsbeispielen zu entnehmen.

Die Einstellung der Resonanzfrequenz fo erfolgt durch Veränderung der wirksamen resultierenden Entkopplungs-Elastizitäten. Das kann zum Einen dadurch erreicht werden, daß die Resonanzfrequenz fo durch Verwendung von weichen Elastizitäten relativ tief eingestellt wird und im Bedarfsfall nachträglich, also am zum Einbau fertigen Gerät, bei Kenntnis von ermittelten Erschütterungs-Resonanzen, zusätzliche Elastizitäten angeordnet werden, so daß eine Verschiebung der Resonanz fo zu höheren Frequenzen erreicht wird.

Solche Zusatz-Elastizitäten können zum anderen aber auch zunächst Bestandteil eines Gerätes sein, das dann eine relativ hohe Resonanzfrequenz fo besitzt. Im Bedarfsfall kann die Zusatz-Elastizität teilweise oder ganz herausgenommen werden, um die Resonanzfrequenz fo zu tieferen Frequenzen hin zu verschieben.

Es ist jedoch nach der Erfindung auch möglich, die vorhandenen Elastizitäten selbst einstellbar auszuführen und anzuordnen. Die Einstellbarkeit muß dabei so konstruiert sein, daß ohne öffnen des Geräte-Gehäuses die gewünschte Einstellung möglich ist.

Das Prinzip der Erfindung soll nachstehend an hand der Zeichnung näher erläutert werden.

Diese zeigt in

Figur 1    in perspektivischer Darstellung ein Abspielgerät nach dem Stand der Technik,

Figur 2    ein Diagramm einer typischen Laufwerkresonanz $f_o$, z.B. gemäß Figur 1,

Figur 3    ein Diagramm der Abtastsicherheit x bei einer typischen Laufwerkresonanz $f_o$,

Figur 4    ein Diagramm eines Beispiels für die Abtastsicher heit x mit Zusatz-Elastizitäten,

Figur 5    ein Diagramm einer beispielhaften Verschiebung der Laufwerkresonanz $f_o$ nach Entfernen der ZusatzElastizitäten,

Figur 6    ein Diagramm mit zwei Beispielen unterschiedlicher Abtastsicherheit,

| Figur 7 | eine perspektivische Darstellung eines Abspielgerätes mit Zusatz-Elastizitäten, |
|---|---|
| Figur 8 | zwei unterschiedliche Halterungen von Zusatz-Elas tizitäten in perspektivischen Teildarstellungen a) und b), |
| Figur 9 | eine vereinfachte Schnittdarstellung mit zwei ent gegengesetzt wirkenden Druckfedern als Zusatz-Elastizitäten, |
| Figur 10 | einen Längsschnitt einer einstellbaren Entkopp lungs-Elastizität, |
| Figur 11 | in fünf stark vereinfachten perspektivischen Dar stellungen (a bis d) eine Montageplatte für ein Laufwerk und Teile eines Gehäuses mit unterschiedlich zur Fahrtrichtung des Fahrzeugs dazwischen angebrachten, verstellbaren Elastizitäten, |
| Figur 12 | in einer perspektivischen Darstellung eine Anord nung einer permanent-magnetischen Zusatz-Elastizität, |
| Figur 13 | in einer perspektivischen Darstellung eine Anord nung einer elektro-magnetischen Zusatz-Elastizität. |

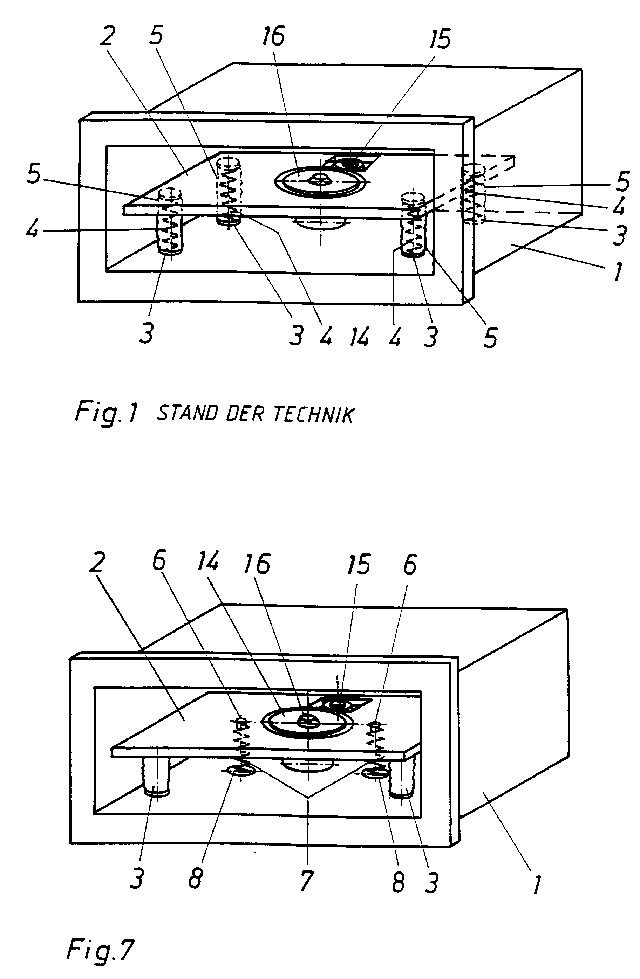

Ein Abspielgerät zeigt Figur 1, wobei in einem Gehäuse 1 ein CD-Laufwerk eingezeichnet ist, das einen Motor 14, einen Plattenteller 16 und eine Abtasteinheit 15 aufweist.

Nach dem Stand der Technik sind vier symmetrisch angeordnete Entkopplungs-Elastizitäten 3 montiert, die durch Schraubendruckfedern 4 in Gummi-Formteilen 5 dargestellt sind, wodurch eine notwendige Dämpfung der Überhöhung der Resonansfrequenz $f_o$ erreicht wird. Die Resonanzfrequenz $f_o$ ergibt sich aus folgender Beziehung

$$f_o = \frac{1}{2\pi} \sqrt{\frac{C}{M}}$$

wobei: C = resultierende Elastizität, M = Masse des zu entkoppelnden Laufwerks ist.

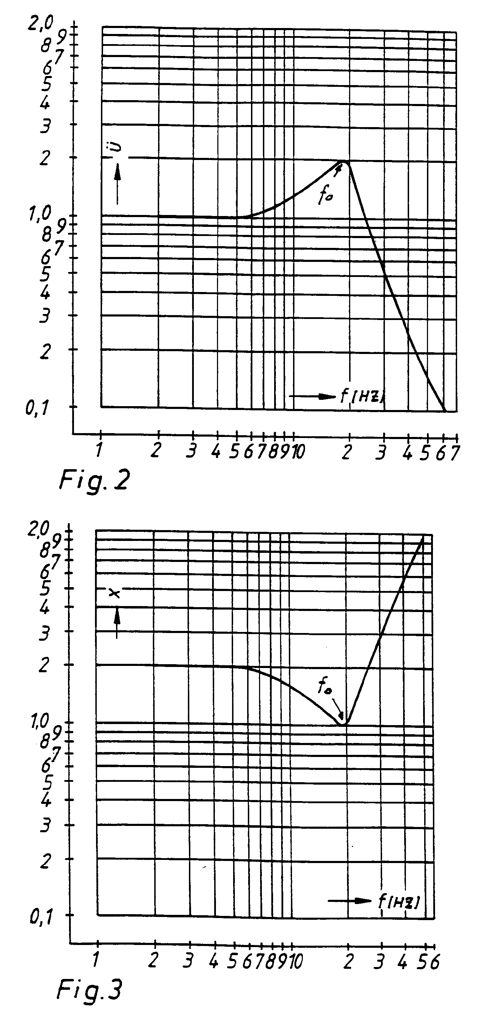

Die Resonanzfrequenz $f_o$ soll in einem typischen Beispiel $f_o = 19$ Hz betragen bei einer Überhöhung Ü von Ü = 2, wie es Figur 2 zeigt. Dort ist die Überhöhung Ü als Funktion der Frequenz f (Hz) wiedergegeben, wobei eine konstante Erschütterungsbeschleunigung b als Anregung vorausgesetzt wurde. Es ist in Figur 2 zu sehen, daß bei Erschütterungsfrequenzen von etwa 6 Hz bis 24 Hz eine Verstärkung der Laufwerks-Bewegung eintritt. Wenn, wie dieses Beispiel zeigt, die Erschütterungen selbst innerhalb des Erschütterungs-Spektrums durch Resonanzen verstärkt sind, kommt es zu Störungen der Abtastung. Unter Umständen ist dann ein weiteres Abspielen der CD nicht mehr möglich.

Die Grenze des ungestörten Abspielens soll durch den Begriff der Abtastsicherheit ausgedrückt werden. Die Abtastsicherheit x als Grenze des ungestörten Abspielens ist dem reziproken Wert der jeweils auftretenden Erschütterungs-Beschleunigung b proportional:

$$x = k \cdot \frac{1}{b},$$

wobei k eine Konstante mit der Dimension $\frac{s^2}{m}$ ist. Im vorliegenden Beispiel, $k = \frac{4s^2}{m}$, ergibt sich für das Laufwerk eine Abtastsicherheit x, die spiegelbildlich zum Beschleunigungsverlauf nach Figur 2 und in Figur 3 dargestellt ist.

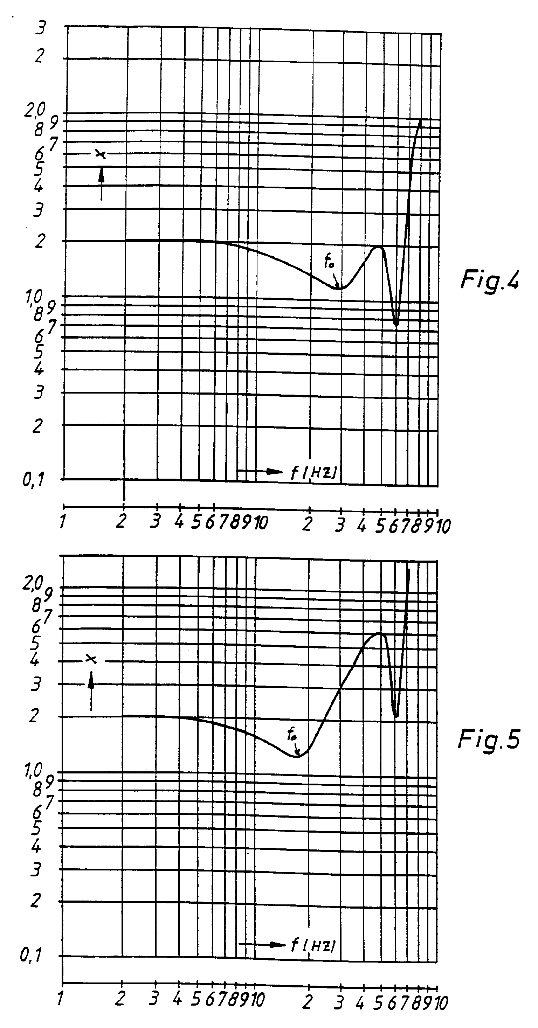

Den Verlauf der Abtastsicherheit x für ein Laufwerk, das zunächst mit entfernbaren Zusatz-Elastizitäten ausgestattet ist, zeigt Figur 4. Die Resonanzfrequenz $f_o$ liegt hier bei $f_o = 30$ Hz mit einer Überhöhung von $Ü_o = 1,5$. Durch eine Stör-Resonanz im Erschütterungsspektrum bei $f_R = 60$ Hz ($Ü_R = 17$) ergibt sich außer dem Minimum bei 30 Hz ein stark ausgeprägtes Minimum der Abtastsicherheit x bei 60 Hz.

Während das Laufwerk-Minimum bei $f_o = 30$ Hz mit $x = 1.14$ beispielsweise noch akzeptabel ist, d.h. es wird noch weiter abgespielt, führt das Minimum der Abtastsicherheit bei $f_R = 60$ Hz mit $x = 0,73$ mit Sicherheit zum Ausfall der Abtastung.

Nach Entfernen der Zusatz-Elastizitäten stellt sich im Beispiel eine Resonanzfrequenz von $f_o = 19$ Hz ($Ü_o = 1,5$) ein und der bisher ungünstige Einfluß der Stör-Resonanz $f_R = 60$ Hz ($Ü_R = 17$) wird vermieden. Das Minimum der Abtastsicherheit bei 60 hz mit $x = 2,05$ führt jetzt nicht mehr zum Ausfall der Abtastung, wie die Kurve in Figur 5 zeigt.

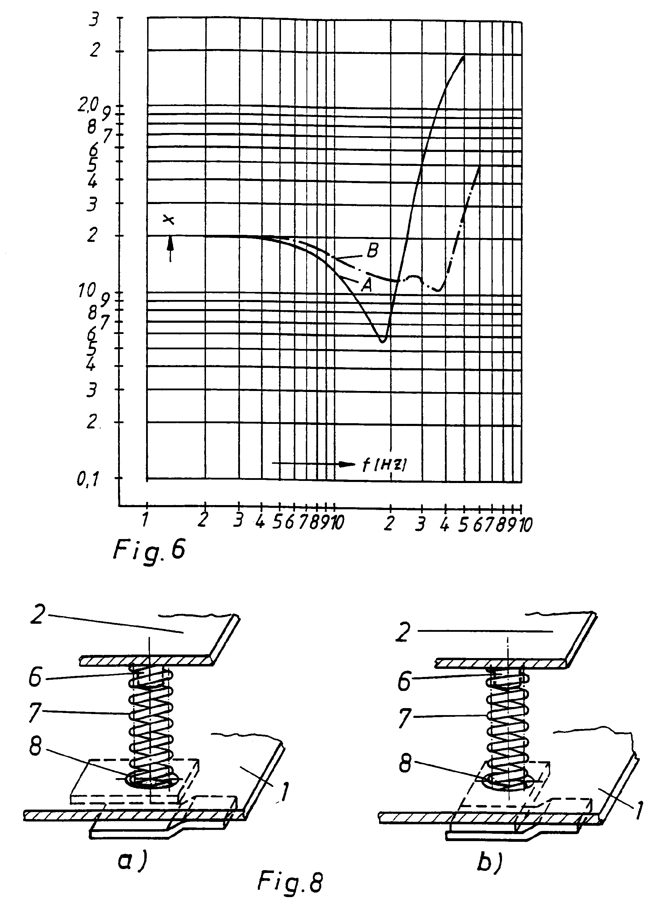

In einem weiteren Beispiel wird nachfolgend gezeigt, daß es u.U. zweckmäßig ist, die Entkopplungs-Elastizitäten des Laufwerks härter auszuführen, um eine Resonanzverschiebung zu höheren Frequenzen zu erreichen. Figur 6 zeigt im Kurven-Verlauf A die Abtastsicherheit, wenn Laufwerks-Resonanz $f_o$ und Stör-Resonanz $f_R$ zusammenfallen ($f_o = 19$ Hz, $Ü_o = 3$, $f_R = 19$, $Ü_R = 1,5$). Die Abtastsicherheit mit $x = 0,55$ führt zum Ausfall der Abtastung. Nach Verschiebung von $f_o$ nach 40 Hz (Kurve B) wird das Minimum der Abtastsicherheit auf $x = 1,05$ verbessert. Würde durch weichere Entkopplungs-Elastizitäten eine Verschiebung zu tieferen Frequenzen vorgenommen, gäbe es keine Verbesserung hinsichtlich der Höhe des Minimums. Das liegt daran, daß die Laufwerks-Resonanz, wenn möglich, höher liegen sollte als eine evtl. vorhandene Stör-Resonanz der Anregung. Der Verlauf der auf das Laufwerk gelangenden Anregungs-Beschleunigungen ist dann mit einem vorgeschalteten Tiefpaßfilter zu vergleichen.

Figur 7 zeigt ein Ausführungsbeispiel, bei dem symmetrisch zu den Entkopplungs-Elastizitäten 3 zwei zusätzliche Elastizitäten 7 angeordnet sind. Sie können bei Bedarf in einfacher Weise entfernt oder aber aufgesteckt werden, wie Figur 8 zeigt. Während am Laufwerks-chassis 2 zwei Zapfen 6 angeordnet sind, enthält das Gehäuse 1 an entsprechender Stelle zwei Bohrungen 8, durch welche die Zusatz-Elastizitäten 7 hindurchragen können. Durch eine Drehung um 90° können die Zusatz-Elastizitäten am Gehäuse 1 gesichert oder vom Gehäuse 1 gelöst werden. Das ist in der Figur 8 a und b gezeigt.

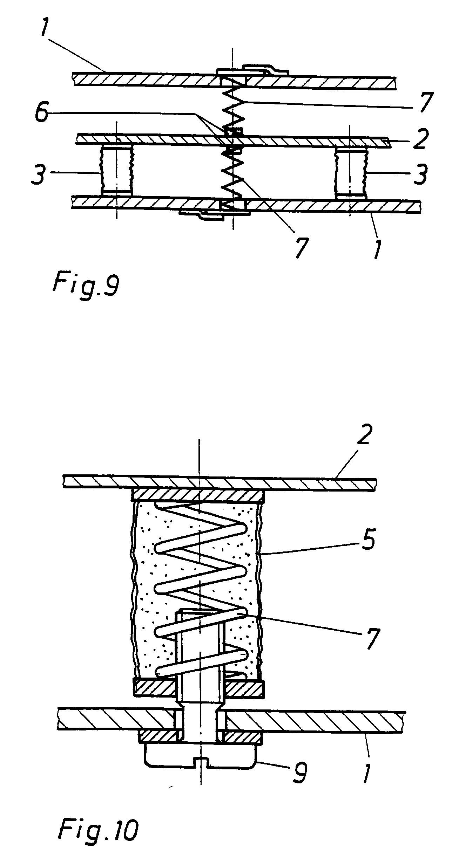

Die Zusatz-Elastizitäten, die als Druckfedern ausgebildet sind, bewirken auf das Laufwerk eine Druckkomponente, d.h. daß die Entkopplungs-Elastizitäten entlastet werden und dadurch die Ruhelage des Laufwerks, das mit seinem Eigengewicht die Entkopplungs-Elastizitäten belastet, verändert. Das kann ausgeglichen werden, wenn Zusatz-Elastizitäten auch auf der Gegenseite des Laufwerks verwendet werden, wie es in Figur 9 dargestellt ist.

In Figur 10 ist eine Entkopplungs-Elastizität 7 gezeigt, die mittels einer Schraube 9 in ihrer Elastizitäts-Eigenschaft verstellbar ist. In diesem Fall werden keine Zusatz-Elastizitäten benötigt.

Die gezeigten Anordnungen beziehen sich auf eine horizontale Einbaulage des Laufwerks bei vertikaler Beschleunigungsanregung.

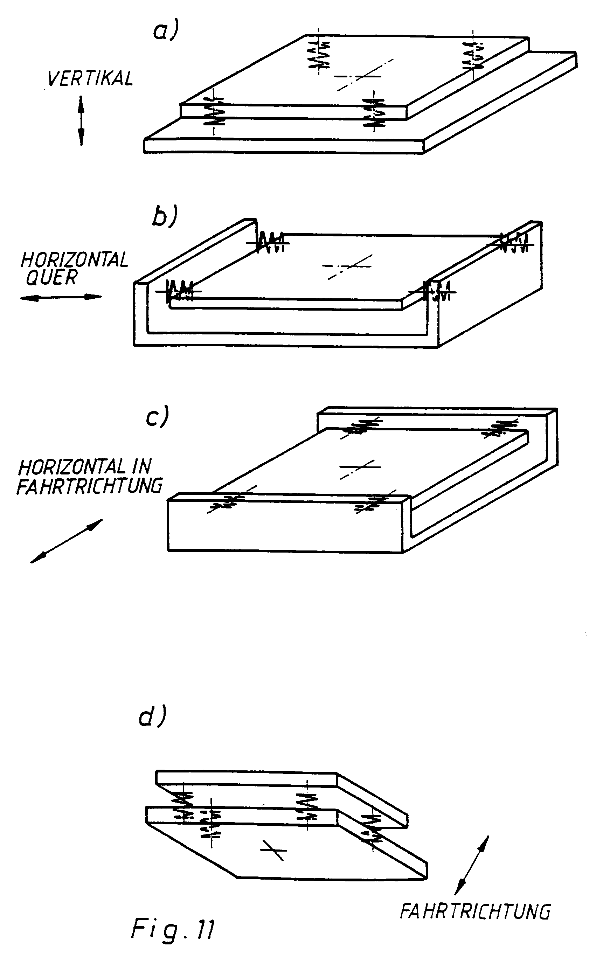

Der vorliegende Erfindungsgedanke ist nicht auf solche Merkmale beschränkt. Obgleich die vertikalen Anregungs-Verhältnisse bei Verwendung von Abspielgeräten in Kraftfahrzeugen von größerer Bedeutung sind, könnten einstellbare Elastizitäten auch in horizontaler Wirkungsrichtung in Fahrtrichtung oder auch quer zur Fahrtrichtung erforderlich sein. Figur 11 a bis d zeigt schematisch die Lage des Laufwerks zum Gehäuse und die Wirkungsrichtungen der Elastizitäten, die im Kraftfahrzeug eine Rolle spielen können. In Figur 11d ist dabei eine nicht horizontale Einbaulage dargestellt und zwar unter einem geneigten Winkel in Fahrtrichtung.

In einer Weiterbildung des Erfindungsgedankens wird eine magnetisch wirkende Anordnung zur Verlagerung der Resonanzfrequenz vorgeschlagen.

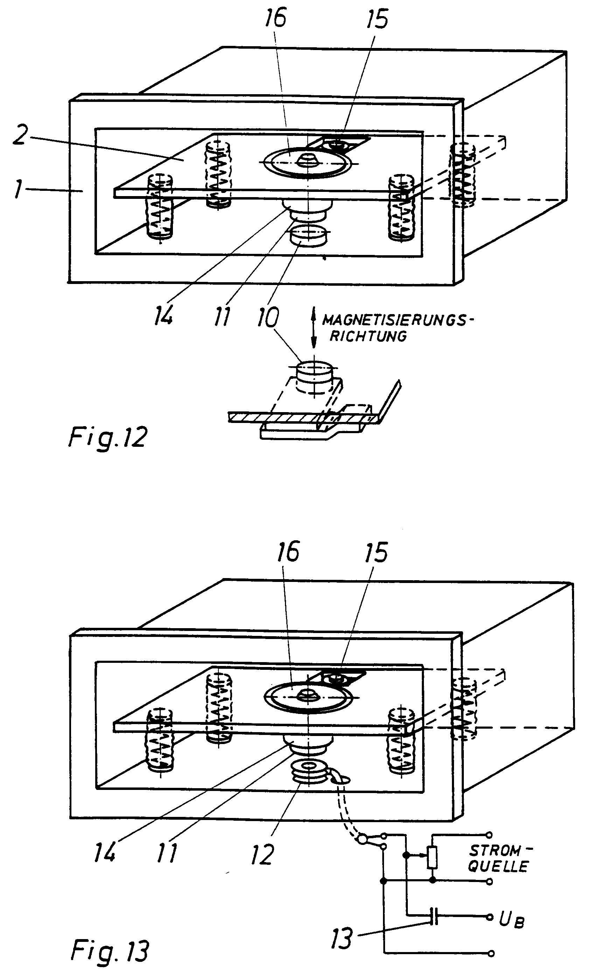

Ein Permanent-Magnet 10, der am Gehäuse angebracht wird, übt auf ein magnetisierbares Teil 11 des Laufwerks eine Kraft aus und verändert dadurch die Lage der aus Entkopplungs-Elastizitat und Masse des Laufwerks bestimmten Resonanzfrequenz. Siehe dazu Figur 12.

Statt eines Permanent-Magneten kann auch eine elektro-magnetische Anordnung dienen. In diesem Fall kann die gewünschte Kraftkomponente durch die Größe des Stromes in der Induktionsspule 12 stetig eingestellt werden, die Figur 13 zeigt.

Schließlich wird vorgeschlagen, die elektro-magnetische Anordnung gleichzeitig auszunutzen, um die dynamische Größe der Bewegung des Laufwerks gegenüber dem Gehäuse zu messen. Die bei der Bewegung des Laufwerks in der Induktionsspule 12 entstehende Wechselspannung wird über einen Kondensator 13 ausgekoppelt und steht als Spannung $U_B$ zur Verfügung, um beispielsweise als Maß zu dienen für die jeweilige Beschleunigungsamplitude des Laufwerks gegenüber dem Gehäuse und so eine gewünschte Umschaltung bei Erreichung eines Schwellwertes in der Servo-Schleifenverstärkung für die Fokus- oder Radial-Nachsteuerung bei der CD-Abtastung zu bewirken.

**Patentansprüche**

1. Gerät mit erschütterungsempfindlichen Teilen (14, 15, 16) für die Montage und den Betrieb in Fahrzeugen, wobei zur Entkopplung von äußeren Vibrationen und/oder Erschütterungen zwischen Geräte-Chassis bzw. Laufwerk (2) und Halterung bzw. Gehäuse (1) des Gerätes Elastizitäten (3, 7) mit Dämpfungseigenschaften vorgesehen sind, **dadurch gekennzeichnet**, daß Mittel vorgesehen sind, um die Resonanzfrequenz $f_o$ von Chassis bzw. Laufwerk (2) des Gerätes durch Veränderung der wirksamen resultierenden Entkopplungs-Elastizität einzustellen.

2. Gerät nach Anspruch 1, **dadurch gekennzeichnet**, daß als Mittel zur Veränderung der Resonanzfrequenz $f_o$ hinzufügbare und abnehmbare Elastizitäten (7) vorgesehen sind.

3. Gerät nach Anspruch 1, **dadurch gekennzeichnet**, daß die vorhandenen Elastizitäten (3, 7) einstellbar oder veränderbar gestaltet sind.

4. Gerät nach Anspruch 1, **dadurch gekennzeichnet**, daß Einstellmittel (9) zur Veränderung der Elastizitäten (3, 7) vorgesehen sind, die am geschlossenen und im Fahrzeug montierten Geräte-Gehäuse (1) einstellbar sind.

EP 0 424 482 B1

5. Gerät nach einem der vorangegangenen Ansprüche, **dadurch gekennzeichnet**, daß als Mittel zur Änderung der ELastizitäten (3, 9) eine magnetisch wirkende Anordnung (10, 11) vorgesehen ist.

6. Gerät nach Anspruch 5, **dadurch gekennzeichnet**, daß am Gehäuse (1) bzw. Laufwerk (2) ein Permanentmagnet (10) angeordnet ist, der eine Kraft auf ein magnetisierbares Teil (11) am Laufwerk (2) bzw. Gehäuse (1) ausübt, das gegenüber dem Permanentmagneten (10) angeordnet ist.

7. Gerät nach Anspruch 5, **dadurch gekennzeichnet**, daß als Mittel zur Veränderung der Elastizitäten eine elektromagnetische Anordnung vorgesehen ist.

8. Gerät nach Anspruch 7, **dadurch gekennzeichnet**, daß eine Induktionsspule (12) am Gehäuse (1) bzw. Laufwerk (2) und ein magnetisierbares Teil (11) am Laufwerk (2) bzw. Gehäuse (1) einander gegenüberstehend angeordnet sind und daß der Erregungsstrom der Induktionsspule (12) einstellbar ist.

9. Gerät nach Anspruch 8, **dadurch gekennzeichnet**, daß ein Kondensator (13) vorgesehen ist, um die in der Induktionsspule (12) induzierte Spannung $U_B$ auszukoppeln, die ein Maß ist für die relative Bewegung und Beschleunigung zwischen dem Gehäuse (1) und dem Laufwerk (2).


## Claims

1. Apparatus including parts (14, 15, 16) which are sensitive to shocks and which are intended for mounting and operation in vehicles, wherein resilient means (3, 7) having damping properties are provided for the purpose of decoupling external vibrations and/or shocks between the chassis of the apparatus or the drive mechanism (2) and the mounting or housing (1) of the apparatus, characterised in that, means are provided for adjusting the resonant frequency $f_o$ of the chassis or the drive mechanism (2) of the apparatus by altering the effect resulting from the decoupling resilient means.

2. Apparatus in accordance with Claim 1, characterised in that, resilient means (7), which can be inserted and removed, are provided as the means for altering the resonant frequency $f_o$.

3. Apparatus in accordance with Claim 1, characterised in that, the existing resilient means (3, 7) are arranged to be adjustable or variable.

4. Apparatus in accordance with Claim 1, characterised in that, there are provided adjusting means (9) for altering the resilient means (3, 7) which can be adjusted in the closed housing (1) of the apparatus when mounted in the vehicle.

5. Apparatus in accordance with any of the preceding Claims, characterised in that, a magnetically effective arrangement (10, 11) is provided as the means for altering the resilient means (3, 9).

6. Apparatus in accordance with Claim 5, characterised in that, there is arranged on the housing (1) or the drive mechanism (2), a permanent magnet (10) which exerts a force on a magnetisable part (11) on the drive mechanism (2) or the housing (1), which part is disposed opposite to the permanent magnet (10).

7. Apparatus in accordance with Claim 5, characterised in that, an electromagnetic arrangement is provided as the means for altering the resilient means.

8. Apparatus in accordance with Claim 7, characterised in that, an induction coil (12) on the housing (1) or the drive mechanism (2) and a magnetisable part (11) on the drive mechanism (2) or the housing (1) respectively are arranged opposite to one another and that the excitation current of the induction coil (12) is adjustable.

9. Apparatus in accordance with Claim 8, characterised in that, there is provided a capacitor (13) for coupling out the voltage $U_B$ which is induced in the induction coil (12) and which is a measure for the relative movement and acceleration between the housing (1) and the drive mechanism (2).

## EP 0 424 482 B1

**Revendications**

1. Appareil comportant des pièces sensibles aux vibrations (14, 15, 16), destiné à être monté et utilisé dans des véhicules, dans lequel des élasticités (3, 7) à propriétés d'amortissement sont prévues entre appareil-châssis ou mécanisme d'entraînement (2) et fixation ou boîtier (1) de l'appareil afin de découpler des vibrations et/ou des secousses externes,
**caractérisé par le fait** que des moyens sont prévus pour régler la fréquence de résonance $f_o$ du châssis ou du mécanisme d'entraînement (2) de l'appareil par modification de l'élasticité de découplage résultante effective.

2. Appareil selon la revendication 1, **caractérisé par le fait** que des élasticités (7) pouvant être ajoutées ou retirées sont prévues comme moyen de modification de la fréquence de résonance $f_o$.

3. Appareil selon la revendication 1, caractérisé par le fait que les élasticités existantes (3, 7) sont réglables ou modifiables.

4. Appareil selon la revendication 1, **caractérisé par le fait** que des moyens de réglage (9) sont prévus pour la modification des élasticités (3, 7) et sont réglables sur le boîtier de l'appareil (1) fermé et monté dans le véhicule.

5. Appareil selon l'une des revendications précédentes, **caractérisé par le fait** qu'un dispositif à effet magnétique (10, 11) est prévu comme moyen de modification des élasticités (3, 9).

6. Appareil selon la revendication 5, **caractérisé par le fait** que sur le boîtier (1) ou le mécanisme d'entraînement (2) est disposé un aimant permanent (10) qui exerce une force sur une pièce magnétisable (11) du mécanisme d'entraînement (2) ou du boîtier (1) opposée à l'aimant permanent (10).

7. Appareil selon la revendication 5, **caractérisé par le fait** qu'un dispositif électromagnétique est prévu comme moyen de modification des élasticités.

8. Appareil selon la revendication 7, **caractérisé par le fait** qu'une bobine d'électroaimant (12) sur le boîtier (1) ou le mécanisme d'entraînement (2) et une pièce magnétisable (11) sur le mécanisme d'entraînement (2) ou le boîtier (1) sont disposées face à face et que le courant d'excitation de la bobine d'électroaimant (12) est réglable.

9. Appareil selon la revendication 8, **caractérisé par le fait** qu'un condensateur (13) est prévu pour découpler la tension $U_B$ induite dans la bobine d'électroaimant (12), cette tension représentant une mesure du mouvement relatif et de l'accélération entre le boîtier (1) et le mécanisme d'entraînement (2).

Fig.1 STAND DER TECHNIK

Fig.7

Fig. 2

Fig. 3

Fig.4

Fig.5

Fig. 6

a )

b )

Fig.8

Fig.9

Fig.10

a)

VERTIKAL

b)

HORIZONTAL
QUER

c)

HORIZONTAL IN
FAHRTRICHTUNG

d)

FAHRTRICHTUNG

Fig. 11

MAGNETISIERUNGS-
RICHTUNG

Fig.12

STROM-
QUELLE

$U_B$

Fig. 13